# FASCICULE DE BREVET EUROPEEN

(11) **EP 0 909 240 B1**
(45) Date de publication et mention de la délivrance du brevet: **07.04.2004**
(21) Numéro de dépôt: 98922895.2
(22) Date de dépôt: 29.04.1998
(51) Int. Cl.: B41M 1/34, B44C 1/02

(54) **PROCEDE DE FABRICATION D'UN SUBSTRAT EN VERRE POURVU DE MOTIF(S) A BASE D'ENCRE(S)**
VERFAHREN ZUR HERSTELLUNG EINES GLASTRÄGERS MIT MUSTER DURCH AUFTRAGUNG EINER KERAMISCHEN FARBSTOFFTINTE
METHOD FOR MAKING A GLASS SUBSTRATE WITH INK-BASED PATTERNS

(30) Priorité: 30.04.1997 DE 19718303
(43) Date de publication de la demande: 21.04.1999
(73) Titulaire: SAINT-GOBAIN GLASS FRANCE, 92400 Courbevoie (FR)
(72) Inventeur: NICOLIN, Heinz-Josef, D-74321 Bietigheim-Bissingen (DE)
(74) Mandataire: Goldenberg, Virginie Isabelle
(86) Numéro de dépôt international: PCT/FR1998/000861
(87) Numéro de publication internationale: WO 1998/049013

(56) Documents cités:
- EP-A- 0 647 885
- DE-A- 3 638 170

## Description

La présente invention concerne un procédé de fabrication d'un substrat en verre revêtu d'au moins une couche d'encre(s) (organique(s) ou inorganique(s)) formant un ou des motifs, par exemple un ou des motif(s) coloré(s) monochrome(s) ou polychrome(s), ce(s) motif(s) étant réalisé(s) en une ou plusieurs encres appropriées pour le revêtement du verre, de préférence en une ou plusieurs encres stables à la lumière par exemple en un émail ou plusieurs émaux.

Dans l'état de la technique, la fabrication de feuilles de verre pourvues d'images ou de décors multicolores stables à la lumière est effectuée en appliquant sur la feuille de verre, à la main ou par sérigraphie, les images multicolores souhaitées, constituées d'encres céramiques ou émaux à cuire, puis en opérant la cuisson des images ou décors.

Lors de l'utilisation de la sérigraphie, plusieurs opérations de sérigraphie doivent être effectuées l'une à la suite de l'autre suivant le nombre de couleurs (chaque couleur nécessitant une passe de sérigraphie), étant entendu que chaque impression doit être suivie d'une opération de séchage avant impression de la couche d'encre suivante. Cette impression n'est rentable que lorsque la même image ou le même décor doit être appliqué sur un grand nombre de feuilles de verre. Pour l'impression d'un petit nombre de pièces avec la même image ou le même décor, une sérigraphie en plusieurs couleurs est très coûteuse dans la mesure où un écran séparé est nécessaire pour chaque couleur de base. En outre, le coût de la confection et du nettoyage de l'écran de sérigraphie est très élevé.

Pour de petites séries, ou lorsqu'il s'agit d'images, motifs ou décors individuels, les émaux ou les encres céramiques peuvent également être appliqués à la main sur la feuille de verre. L'application à la main des encres à cuire sur la surface du verre est toutefois liée à des exigences particulières en matière d'encres et de dextérité de la personne chargée de cette opération, les encres appliquées restant pendant une longue durée dans un état dans lequel elles peuvent facilement s'estomper au cours du procédé d'application des différentes couleurs les unes à la suite des autres, en raison du manque de capacité d'absorption de la surface du verre et des propriétés particulières des encres à cuire habituellement, employées.

L'invention a pour but de fournir un procédé de fabrication de substrat(s) en verre pourvu(s) de motif(s) à base d'encre(s), en particulier d'encre(s) stable(s) à la lumière, ce procédé étant approprié pour fabriquer, à moindre coût et sans risque d'altération des couleurs, des petites séries de substrats en verre pourvus de motif(s) coloré(s), ce procédé permettant en outre d'obtenir rapidement et de façon reproductible des motifs variés et de bonne qualité graphique.

Ce but est atteint par le procédé selon l'invention dans lequel on prend un modèle du ou des motifs souhaités, constitué d'encre(s) ou matière(s) colorée(s) quelconque(s) et se trouvant sur un ou des support(s) quelconque(s), on convertit le(s) motif(s) souhaité(s) du modèle en des données (ou un signal) numériques ou analogiques, on traite les données (ou signal) obtenues à l'aide d'un logiciel de traitement d'images et l'on reproduit (ou reconstitue) le(s) motif(s) souhaité(s), sous forme d'une ou plusieurs couches d'encre(s), sur le substrat en verre à l'aide d'un moyen d'impression relié à l'ordinateur incorporant le logiciel de traitement d'images. En d'autre termes, le(s) motif(s) souhaité(s) est (sont) reproduit(s) sur le substrat en verre à partir d'un modèle grâce à un dispositif de reproduction comprenant un dispositif de saisie (ou de prise) d'images, un logiciel de traitement d'images et un moyen d'impression. Le(s) motif(s) est (sont) ensuite généralement cuit(s) à des températures appropriées (c'est-à-dire par exemple à haute température pour des encres inorganiques telles que des émaux, notamment à des températures de l'ordre de 450 à 750°C).

Le procédé selon l'invention permet d'imprimer tout type de motif sur tout type de surface de verre sans nécessiter de changement du dispositif de reproduction en fonction du motif à imprimer (contrairement au procédé par sérigraphie où chaque motif nécessite un écran de sérigraphie particulier). Par ailleurs, dans le cas où l'on réalise un (des) motif(s) coloré(s) et que l'on utilise un moyen d'impression (de type dispositif à tête(s) d'impression ou tête(s) de décoration ou un traceur) couleur, il est possible de réaliser l'impression en un seul passage, quel que soit le nombre de couleurs, ceci permettant un gain de productivité ainsi que la suppression des opérations de séchage entre les opérations d'application des différentes couleurs. En outre, selon le choix du modèle, le procédé conforme à l'invention permet de distinguer et de déterminer les couleurs et nuances souhaitées sur un modèle plus rapidement que sur le substrat en verre sur lequel il est généralement nécessaire d'opérer une opération de cuisson avant d'obtenir les couleurs finales. Le procédé conforme à l'invention permet également de reproduire directement des images, décors ou motifs déjà existants, c'est-à-dire de les transférer directement sur le substrat en verre, et le(s) motif(s) imprimé(s) obtenu(s) présente(nt) une très bonne qualité graphique (il est notamment possible de reproduire de façon satisfaisante des photos).

On peut noter également, dans le cas où l'on utilise une encre à cuire stable à la lumière de type émail, que le(s) motif(s) imprimé(s) présente(nt) après cuisson une excellente pérennité, les émaux cuits présentant un bon accrochage sur le verre, une bonne dureté et une bonne tenue des couleurs.

Le substrat en verre revêtu du ou des motifs selon le procédé de l'invention peut être tout type de substrat vitreux ou à base de verre, en particulier peut se présenter sous forme d'une ou plusieurs feuilles de verre. Il peut s'agir, par exemple, d'un vitrage utilisé dans le bâtiment ou dans l'industrie automobile. Le substrat sur lequel le motif est déposé peut être un substrat en verre nu ou éventuellement un substrat déjà pourvu d'un motif ou d'un revêtement décoratif ou fonctionnel.

L'encre (ou les encres) ou matière(s) colorée(s) du modèle peut (peuvent) être toute(s) encre(s) ou matière(s) colorée(s) quelconque(s), de même que le(s) support(s) du modèle peut (peuvent) être un (des) support(s) quelconque(s), l'encre (ou les encres) ou matière(s) colorée(s) et le(s) support(s) étant cependant préférentiellement compatibles. Pour ce qui est de l'encre (ou des encres) utilisée(s) pour revêtir le substrat en verre, il peut s'agir de tout type d'encre(s) (organique(s) ou inorganique(s)) appropriée(s) pour le revêtement du verre (choisié(s) par exemple parmi les émaux ou encres céramiques, les résines photosensibles, etc.) et, de préférence, il s'agit d'encre(s) à cuire, stable(s) à la lumière (par exemple de type encre céramique ou émail), le choix de l'encre (ou des encres) étant à la portée de l'homme du métier en fonction du substrat utilisé, du motif souhaité et de l'application envisagée pour le substrat revêtu.

De préférence, on utilise, pour le revêtement du substrat en verre, au moins une encre à cuire comprenant un ou des constituants inorganiques (en particulier des colorants ou pigments inorganiques) et, de façon particulièrement préférée, au moins une encre à cuire de type émail. Dans le cas de l'utilisation d'au moins un émail, l'émail utilisé comprend généralement une poudre formée d'au moins une fritte de verre et, éventuellement, d'un ou plusieurs pigments, et comprend un médium organique et/ou inorganique (le plus souvent organique) permettant la mise à viscosité désirée pour l'application sur le substrat et permettant la liaison avec le substrat.

La fritte de verre peut être toute fritte de verre connue à base d'oxydes choisis, par exemple, parmi les oxydes de silicium, de plomb, de zinc, de bismuth, de titane, de zirconium, de sodium, de bore, de lithium, de potassium, de calcium, d'aluminium, d'étain, de vanadium, de molybdène, de magnésium, etc.

Les pigments peuvent être choisis parmi les composés contenant des oxydes métalliques tels que des oxydes de chrome, des oxydes de cuivre, des oxydes de fer, des oxydes de cobalt, des oxydes de nickel, ou peuvent être choisi parmi les chromates de cuivre, les chromates de cobalt, etc.

L'émail peut également comprendre plusieurs frittes, un ou des métaux (fer, zinc, argent...) ou tout autre additif pouvant être utilisé dans les émaux.

Le médium présent dans l'émail doit permettre la mise à wiscosité désirée pour l'application sur le substrat (par l'intermédiaire du ou des moyens d'impression) et peut comprendre des solvants, des diluants, des huiles telles que des huiles de pin et autres huiles végétales, des résines telles que des résines acryliques, des fractions de pétrole, des matières filmogènes, des produits à base de glycols, peut être un médium thermofusible, etc.

Par modèle selon l'invention, on entend aussi bien un modèle dont le(s) motif(s) correspond(ent) à l'identique au(x) motif(s) souhaité(s), qu'un modèle dont le(s) motif(s) correspond(ent) approximativement au(x) motif(s) souhaité(s) sans pour autant être nécessairement strictement identique(s), notamment en matière de dimensions. En particulier, il n'est pas nécessaire que le(s) motif(s) soit (soient) en grandeur nature sur le support, comme cela est nécessaire lors de la fabrication par sérigraphie. Grâce à l'utilisation d'un logiciel de traitement d'images approprié, il est en particulier possible de corriger sans problèmes le modèle de la manière souhaitée, par exemple de modifier l'échelle ou les dimensions selon différents axes.

Selon l'invention, on peut utiliser un modèle déjà existant. On peut également fabriquer le modèle. Ainsi, selon un mode de réalisation-de l'invention, le(s) motif(s) à imprimer est (sont) d'abord confectionné(s) sur un (des) support(s) quelconque(s) à partir d'encre(s) ou matière(s) colorée(s) appropriée(s) pour ce(s) support(s) (ou est (sont) confectionné(s) à partir d'encre(s) ou matière(s) colorée(s) quelconque(s) sur un (des) support(s) approprié(s) pour cette (ces) encre(s) ou matière(s) colorée(s)) et est (sont), au besoin, corrigé(s) jusqu'à ce qu'il(s) atteigne(nt) sa (leur) forme définitive. On choisit préférentiellement dans ce cas une (des) encre(s) ou matière(s) colorée(s) et un support unique faciles à mettre en oeuvre et compatibles, par exemple de type encre(s) organique(s) pour peinture ou crayon(s) et de type carton ou papier respectivement.

Le(s) support(s) présentant le(s) motif(s) (c'est-à-dire le modèle) est (sont) ensuite balayé(s) au moyen d'un dispositif de saisie (ou de prise) d'images, c'est-à-dire un dispositif, tel qu'un scanner ou un capteur de type CCD (Charge Coupled Device), permettant de convertir des images en des données (ou un signal) numériques ou analogiques. On peut utiliser des dispositifs connus (avantageusement des dispositifs à haute résolution), par exemple un scanner couleur (notamment si le(s) motif(s) est (sont) un (des) motif(s) coloré(s)), les données d'image ou signaux de commande servant à la commande du moyen d'impression étant alors produits par un logiciel de traitement d'image approprié.

Des dispositifs tels que des dispositifs à tête(s) d'impression ou à tête(s) de décoration ou des traceurs, conviennent comme moyen(s) d'impression pour l'exécution du procédé conforme à l'invention. Dans le cas où l'on utilise notamment comme moyen d'impression une imprimante jet d'encre (cette imprimante pouvant éventuellement être déjà pourvue d'un dispositif de saisie d'images tel qu'un scanner), les gouttelettes d'encre(s) sont éjectées à partir d'une ou plusieurs ouvertures ( ou buses ou ajutages) situées dans une ou plusieurs têtes d'impression jet d'encre pilotées par exemple par une ou des commandes numériques. On peut également utiliser notamment comme moyen d'impression le système connu sous le nom de système à Aérographe numérique (« Airbrush »), particulièrement approprié pour des réalisations horizontales. Eventuellement, il peut être souhaitable d'adapter les ajutages de l'Aérographe ou de l'imprimante jet d'encre à la viscosité de l'encre ou des encres utilisées (à titre d'exemple, le diamètre des ajutages peut être de l'ordre de 50 à 100 µm, voire être agrandi jusqu'à 200-300 µm, un agrandissement étant cependant pénalisant en termes de résolution et de qualité de l'image) et/ou de veiller, notamment par la dilution au moyen de diluants appropriés de la ou des encres utilisées, à ce que les propriétés d'écoulement (en particulier la viscosité) de la ou desdites encres soient adaptées aux ajutages de l'Aérographe ou de l'imprimante jet d'encre.

Selon un mode de réalisation avantageux de l'invention, on utilise pour revêtir le substrat en verre une ou des encres, de préférence un émail ou des émaux, présentant une granulométrie maximale inférieure, à 50 µm (préférentiellement inférieure à 30 µm et, de façon particulièrement préférée, notamment dans le cas où l'on utilise un traceur de type imprimante jet d'encre, inférieure à 5 µm) et dont au moins 90 % en poids des particules présentent également de préférence un diamètre inférieur à 25 µm (avantageusement inférieur à 15 µm, voire, dans le cas notamment où l'on utilise un traceur de type imprimante jet d'encre, inférieur à 3 ou 5 µm). La viscosité de l'encre ou des encres est généralement comprise entre 2 et 1000 cP (avantageusement comprise entre 2 et 500 cP voire inférieure à 100 ou à 25 cP) à la température d'application sur le substrat.

Après chaque opération de dépôt d'encre(s) ou chaque passage (le(s) motif(s) souhaité(s) étant généralement déposé(s) en un seul passage), il peut être souhaitable d'opérer un séchage de la ou des couche(s) d'encre(s) pour permettre une adhésion et une tenue suffisante sur le verre autorisant la manipulation du substrat revêtu. Lorsque le(s) motif(s) est (sont) suffisamment sec(s), le substrat revêtu est chauffé, par exemple à des températures de l'ordre de 450-750°C (correspondant aux températures habituelles de cuisson des émaux), afin de cuire le motif (par exemple afin d'opérer la fusion et la vitrification de l'émail ou des émaux). Il est également possible de prévoir une opération de trempe (par exemple par voie thermique par refroidissement brusque) du substrat afin de lui conférer des propriétés mécaniques et thermiques améliorées. Le cas échéant, la cuisson peut s'opérer pendant le traitement thermique lié au bombage du substrat.

Les substrats obtenus selon l'invention présentent une ou plusieurs couches d'encre(s) formant un ou des motifs et présentant une surface exempte notamment d'empreintes de maillage (contrairement aux substrats obtenus par sérigraphie). Les motifs obtenus présentent une bonne qualité graphique.

Le procédé conforme à l'invention sera décrit plus en détails ci-après à l'aide d'un exemple d'exécution.

Dans le présent exemple, une feuille de verre épaisse de 6 mm présentant des dimensions de 200 x 100 cm doit être garnie d'un décor multicolore. Le décor multicolore doit être constitué d'encres translucides ou transparentes stables à la lumière.

Le décor multicolore est tout d'abord confectionné sur un carton ou un autre support pour peinture à partir d'encres classiques et au besoin corrigé jusqu'à ce qu'il atteigne sa forme définitive. Le support pour peinture portant le décor terminé est alors balayé au moyen d'un scanner couleur à haute résolution de dimensions appropriées. Les données d'image ou signaux de commande servant à la commande d'un poste d'Aérographe à quatre couleurs (noir et les trois couleurs primaires : rouge, jaune et bleu) sont produits par un logiciel de traitement d'image approprié.

Le système d'Aérographe horizontal de la société suisse BAUMGARTNER TRADING AG, par exemple, a fait ses preuves en tant que système de reproduction. A l'aide de ce système d'Aérographe, toutes les couleurs sont appliquées au cours d'une seule et même opération d'impression, 256 gradations étant possibles pour chaque couleur. De cette manière, il est possible de réaliser des reproductions de couleurs tout à fait identiques.

Pour la cuisson sur verre à environ 500 à 700°C, on utilise comme encres dans cet exemple, des encres à cuire composées de colorants inorganiques telles que des émaux. Les encres disponibles dans le commerce sont diluées au moyen de diluants appropriés dans une mesure telle que l'application d'encre soit possible à l'aide des ajutages de l'Aérographe. Le cas échéant, les ajutages de l'Aérographe sont adaptés à ces encres, c'est-à-dire qu'ils doivent être pourvus d'orifices légèrement plus grands.

Grâce au dispositif de reproduction cité, le décor est transféré sur la feuille de verre, la feuille de verre restant en position horizontale jusqu'à ce que l'encre soit largement sèche. Par la suite, la feuille de verre est chauffée dans un four horizontal à une température d'environ 650°C, lors de quoi le décor coloré fond en une couche émaillée et est cuit dans la surface du verre. La feuille de verre est ensuite trempée par refroidissement brusque à l'air dans une installation dite de trempe.

Le procédé selon l'invention peut être utilisé pour fabriquer des vitrages pourvu de motif(s) décoratif(s) ou fonctionnel(s), des écrans, etc.

## Revendications

1. Procédé de fabrication de substrats en verre comportant un (des) motif(s) à base d'encre(s), ***caractérisé en ce que*** le(s) motif(s) souhaité(s) est (sont) reproduit(s) sous forme d'au moins une couche d'encre(s) appliquée directement sur le substrat en verre à partir d'un modèle du ou des motifs souhaités, constitué d'encre(s) ou matière(s) colorée(s) quelconque(s) et se trouvant sur un ou des support(s) quelconque(s), grâce à un dispositif de reproduction comprenant un dispositif de saisie d'images, un logiciel de traitement d'images et un moyen d'impression constitué par une imprimante à jet d'encre ou un aérographe.

2. Procédé selon la revendication 1, ***caractérisé en ce que*** le modèle du ou des motifs souhaités, constitué d'encre(s) ou matière(s) colorée(s) quelconque(s), est fabriqué sur un support approprié pour cette (ces) encre(s) ou matière(s) colorée(s), avant d'être reproduit sur le substrat en verre à l'aide du dispositif de reproduction.

3. Procédé selon la revendication 1 ou la revendication 2, ***caractérisé en ce qu'on*** utilise, pour le revêtement du substrat en verre, au moins une encre à cuire telle qu'un émail.

4. Procédé selon l'une des revendications 1 à 3, ***caractérisé en ce qu'on*** utilise une ou des encres dont au moins 90 % en poids des particules présentent un diamètre inférieur à 25 µm.

5. Procédé selon l'une des revendications 1 à 4, ***caractérisé en ce qu'on*** utilise une ou des encres dont la viscosité est comprise entre 2 et 1000 cP.

6. Procédé selon l'une des revendications 1 à 5, ***caractérisé en ce que*** le substrat revêtu est chauffé à des températures de l'ordre de 450 à 750 °C afin de cuire le(s) motif(s).

7. Procédé selon l'une des revendications 1 à 6, ***caractérisé en ce que*** le moyen d'impression est un Aérographe à quatre couleurs.

8. Procédé selon l'une des revendications 1 à 7, ***caractérisé en ce qu'on*** utilise un scanner couleur comme dispositif de saisie d'images.

9. Procédé selon l'une des revendications 1 à 3, ***caractérisé en ce que*** le(s) motif(s) est (sont) imprimé(s) en un seul passage.

## Claims

1. Method of manufacturing glass substrates comprising one or more ink-based patterns, **characterised in that** the required pattern or patterns are reproduced in the form of at least one layer of ink or inks applied directly to the glass substrate from a model of the required pattern or patterns, consisting of any coloured ink or inks or material or materials situated on one or more of any supports, by virtue of a reproduction device comprising an image capture device, image processing software and printing means consisting of an inkjet printer or an aerograph.

2. Method according to Claim 1, **characterised in that** the model of the required pattern or patterns, formed from any coloured ink or inks or material or materials, is fabricated on a support appropriate for this coloured ink or inks or material or materials, before being reproduced on the glass substrate by means of the reproduction device.

3. Method according to Claim 1 or Claim 2, **characterised in that** use is made, for the coating of the glass substrate, of at least one stoving ink such as an enamel.

4. Method according to one of Claims 1 to 3, **characterised in that** use is made of one or more inks where at least 90% by weight of the particles have a diameter less than 25 µm.

5. Method according to one of Claims 1 to 4, **characterised in that** use is made of one or more inks whose viscosity is between 2 and 1000 cP.

6. Method according to one of Claims 1 to 5, **characterised in that** the coated substrate is heated to temperatures of around 450° to 750°C in order to stove the pattern or patterns.

7. Method according to one of Claims 1 to 6, **characterised in that** the printing means is a four-colour aerograph.

8. Method according to one of Claims 1 to 7, **characterised in that** a colour scanner is used as an image capture device.

9. Method according to one of Claims 1 to 3, **characterised in that** the pattern or patterns are printed in a single pass.

## Patentansprüche

1. Verfahren zum Herstellen von Glassubstraten mit einem Motiv (mit Motiven) auf Farbbasis, **dadurch gekennzeichnet, dass** das gewünschte Motiv (die gewünschten Motive) ausgehend von einer Vorlage des/der gewünschten Motivs / Motive , die aus beliebiger Farbe oder farbigen Materialien besteht und sich auf einem oder mehreren beliebigen Trägern befindet, mit Hilfe einer Reproduktionseinrichtung bestehend aus einer Bilderfassungseinrichtung, einer Bildverarbeitungssoftware und einem Mittel zum Drucken, bestehend aus einem Tintenstrahldrucker oder Aerographen, in Form mindestens einer Farbschicht direkt auf das Glassubstrat reproduziert wird/werden.

2. Verfahren nach Anspruch 1, **dadurch gekennzeichnet, dass** das gewünschte Motiv (die gewünschten Motive) bestehend aus beliebiger Farbe oder farbigen Materialien, auf eine für diese Farben oder farbigen Materialien geeignete Unterlage aufgebracht wird, bevor es mit Hilfe der Reproduktionseinrichtung auf das Glassubstrat reproduziert wird.

3. Verfahren nach Anspruch 1 oder Anspruch 2, **dadurch gekennzeichnet dass** für die Beschichtung des Glassubstrats mindestens eine Einbrennfarbe, z. B. ein Email, verwendet wird.

4. Verfahren nach einem der Ansprüche 1 bis 3, **dadurch gekennzeichnet, dass** man eine Farbe / Farben verwendet, bei der / denen wenigstens 90 Gewichtsprozent der Teilchen einen Durchmesser geringer als 25 µm aufweisen.

5. Verfahren nach einem der Ansprüche 1 bis 4, **dadurch gekennzeichnet, dass** eine Tinte / Tinten verwendet wird / werden, deren Viskosität zwischen 2 und 1000 cP liegt.

6. Verfahren nach einem der Ansprüche 1 bis 5, **dadurch gekennzeichnet, dass** das beschichtete Substrat auf Temperaturen in der Größenordnung von 450 bis 750 °C erhitzt wird, um das Motiv / die Motive einzubrennen.

7. Verfahren nach einem der Ansprüche 1 bis 6, **dadurch gekennzeichnet, dass** die Druckmöglichkeit ein 4-Farben-Aerograph ist.

8. Verfahren nach einem der Ansprüche 1 bis 7, **dadurch gekennzeichnet, dass** ein Farbscanner als Bilderfassungseinrichtung verwendet wird.

9. Verfahren nach einem der Ansprüche 1 bis 3, **dadurch gekennzeichnet, dass** das Motiv / die Motive in einem einzigen Durchgang gedruckt wird / werden.
